# EUROPÄISCHE PATENTSCHRIFT

(11) **EP 4 171 832 B1**
(45) Veröffentlichungstag und Bekanntmachung des Hinweises auf die Patenterteilung: **28.02.2024**
(21) Anmeldenummer: 21733743.5
(22) Anmeldetag: 10.06.2021
(51) Int. Cl.: B04B 1/14

(54) **SELBSTENTLEERENDER SEPARATOR**
SELF-EMPTYING SEPARATOR
SÉPARATEUR À VIDAGE AUTOMATIQUE

(30) Priorität: 24.06.2020 DE 102020116658
(43) Veröffentlichungstag der Anmeldung: 03.05.2023
(73) Patentinhaber: GEA Mechanical Equipment GmbH, 59302 Oelde (DE)
(72) Erfinder: HÖLSCHER, Andreas, 59320 Ennigerloh (DE); BATHELT, Thomas, 59302 Oelde (DE)
(74) Vertreter: Specht, Peter
(86) Internationale Anmeldenummer: PCT/EP2021/065652
(87) Internationale Veröffentlichungsnummer: WO 2021/259659

(56) Entgegenhaltungen:
- WO-A1-99/16550
- DE-A1- 3 503 696
- DE-A1-102005 049 941
- DE-C1- 3 115 875

## Beschreibung

Die Erfindung betrifft einen selbstentleerenden Separator nach dem Oberbegriff des Anspruchs 1 sowie ein Verfahren zur Verarbeitung eines Schleudergutes nach Anspruch 9.

Diskontinuierlich entleerende Separatoren im Sinne dieser Schrift verfügen neben einem oder mehreren Abläufen für eine oder mehrere Flüssigkeitsphasen über einen Entleerungsmechanismus mit einem Kolbenschieber, der fluidbetätigt, insbesondere mit Flüssigkeit als Fluid, abwechselnd in eine Öffnungs- und in eine Schließstellung bewegbar ist, wodurch bzw. bei der Kolbenschieber Feststoffaustragsöffnungen in der Trommelwandung freigibt (Öffnungsstellung) und verschließt (Schließstellung). In der Öffnungsstellung wird eine Feststoffphase aus der Schleudertrommel abgeleitet. In der Schließstellung ist dies nicht der Fall.

Zum Gewährleisten einer präzisen Funktion eines solchen Trommelentleerungssystem eines selbstentleerenden Separators kann dieser ein Fluid-Zufuhr- und Ablasssystem mit einem Kolbenventil aufweisen. Dieses dient dazu, eine Kammer am Kolbenschieber mit Fluid - eine Flüssigkeit - zu füllen und es dient dazu, für eine Entleerung von Feststoffen Fluid aus einer Kammer am Kolbenschieber entweichen zu lassen, so dass sich der Kolbenschieber bewegen kann. So kann bei einem Separator mit vertikaler Drehachse beispielsweise Fluid unterhalb eines Kolbenschiebers entweichen, so dass das Produkt in der Trommel ihn vertikal nach unten drückt. Dabei ist anzustreben, bei der Entleerung ein möglichst genau bemessenes Flüssigkeitsvolumen in kurzer Zeit dem Hydrauliksystem der Schleudertrommel zuzuführen ("Öffnungsfluid"). Durch das Volumen des Öffnungsfluids wird somit die Entleerungsmenge bestimmt.

Bei vielen Trennprozessen siehe z.B. die WO 99/16550 A1 und die DE 35 03 696 A1, ist es vorteilhaft, die Entleerungsmenge flexibel über eine elektronische Steuerungsvorrichtung einstellen oder regeln bzw. allgemeiner verändern zu können. Die Herausforderung dabei ist, zuverlässig ein je nach Bedarf veränderliches, für den konkreten Bedarf möglichst genau bemessenes Fluidvolumen zu dosieren, selbst wenn der Vordruck in der Fluidversorgung erheblichen Schwankungen unterliegt.

Zur Dosierung des Volumens des Öffnungsfluids wird nach der Patentschrift DE 31 15 875 C1 eine Dosiervorrichtung mit einem Gehäuse und einem darin beweglich geführten Dosierelement - die beispielsweise ein Dosierkolben oder eine Dosiermembran sein kann - genutzt. Wird das Gehäuse mit Fluid befüllt, wird hierdurch das Dosierelement bewegt und bis gegen einen Anschlag einer Einstellschraube gedrückt. Die so abgemessene Flüssigkeitsmenge wird anschließend als Öffnungsfluid genutzt, um z.B. ein Kolbenventil in der Schleudertrommel zu öffnen. Hierzu wird das Dosierelement z.B. pneumatisch zurück in eine Endposition gedrückt, wodurch das Fluid bei entsprechender Ventilstellung in die Schleudertrommel und somit zum Kolbenventil gefördert werden kann bzw. auch wird.

Durch ein Verstellen einer Stellschraube wird bei Bedarf eine Anschlagsposition für das Dosierelement verändert, was wiederum die Flüssigkeitsmenge verändert, die durch die Dosiervorrichtung abgemessen wird. Dies bedeutet jedoch, dass der Bediener direkt an der Maschine das jeweils benötigte Entleerungsvolumen manuell einstellen muss. In der DE 31 15 875 C1 wird dabei eine verformbare Membran als das Dosierelement verwendet.

Eine Variante dieser Dosiervorrichtung ist in der DE 10 2005 049 941 A1 beschrieben. Hier wird als das Dosierelement ein in einem Zylinder als Gehäuse geführter Dosierkolben verwendet. Der Hub des Dosierkolbens wird durch eine Gewindestange, welche den Anschlag für den Dosierkolben bildet, begrenzt. Die Position des Anschlages ist elektromotorisch verstellbar, um so das Volumen des Öffnungsfluids über eine elektronische Steuerung einzustellen oder ggf. auch automatisiert anpassen zu können.

Die Dosiervorrichtungen nach dem Stand der Technik haben sich in der Praxis gut bewährt, jedoch benötigen diese Lösungen mechanische Stellglieder zur Dosierung des benötigten, um die gewünschte Position des Kolbens mit der Gewindespindel anfahren zu können. Dies kann bei hohen Dynamikanforderungen an die Regelprozesse zur Feststoffaustragung hinderlich sein.

Die Aufgabe der Erfindung ist es, dieses Problem zu beheben.

Die Erfindung erreicht dieses Ziel durch den Gegenstand des Anspruchs 1. Sie schafft ferner das Verfahren des Anspruchs 9.

Geschaffen wird nach Anspruch 1 ein selbstentleerender Separator, der eine drehbare Schleudertrommel mit vertikaler Drehachse aufweist, die mit Feststoffaustragsöffnungen versehen ist, denen ein Entleerungsmechanismus mit einem Kolbenschieber zugeordnet ist, der fluidbetätigt, insbesondere mittels einer Flüssigkeit, in eine Öffnungs- und in eine Schließstellung bewegbar ist, wobei der Entleerungsmechanismus ferner eine dem Kolbenschieber zugeordnete Steuerungsanordnung zur Steuerung seiner Öffnungs- und Schließbewegungen aufweist, die mit einem Steuergerät und mit einer Dosiervorrichtung zur Dosierung und Abgabe der zum Öffnen benötigten Fluidmenge, insbesondere Flüssigkeitsmenge versehen ist, wobei die Dosiervorrichtung ein in einem Dosierraum verschiebliches Dosierelement aufweist, das den Dosierraum in einen Fluidraum und in einen Druckraum zur Beaufschlagung mit Druckluft unterteilt, und wobei die Dosiervorrichtung ein Einstellsystem zur Dosierung der zum Öffnen benötigten Fluidmenge, insbesondere Flüssigkeitsmenge, im Fluidraum aufweist, welches eine Messeinrichtung aufweist.

Nach der besonders einfach realisierbaren und dennoch präzise arbeitenden Erfindung ist dabei ferner vorgesehen, dass die Messeinrichtung auf einem fluidischen Messprinzip basiert. Es sind vorzugsweise keine mechanischen Stellglieder, wie z.B. eine Gewindespindel zur Einstellung des Öffnungsfluidvolumens erforderlich. Somit kann die Dosiereinrichtung vorteilhaft auch sehr hohe Dynamikanforderungen der Regelungsprozesse zur Feststoffaustragung erfüllen.

Es ist erfindungsgemäß ferner vorgesehen, dass das Einstellsystem mit der Messvorrichtung, die auf einem fluidischen Messprinzip basiert, eine in dem Druckraum angeordnete Druckmesseinrichtung aufweist, mit welcher der Druck im Druckraum bestimmbar ist, wobei der Druck im Druckraum eine Basis der bzw. zur Dosierung der zum Öffnen benötigten Flüssigkeitsmenge ist bzw. bildet. Derart wird das Merkmal des berührungslosen Messprinzips besonders vorteilhaft und konstruktiv einfach umgesetzt.

Das zum Öffnen verwendete Fluid ist eine Flüssigkeit, vorzugsweise ist es Wasser oder es kann eine andere Flüssigkeit verwendet werden, so ein fließfähiges, im Separator zu verarbeitendes Produkt oder eine Phase dieses Produktes.

In einer bevorzugten Ausführungsvariante der Erfindung weist die Steuerungsanordnung eine Einspritzkammer für Öffnungsfluid und eine Einspritzkammer für Schließfluid auf, denen über eine Öffnungsfluidzuführung bzw. eine Schließfluidzuführung, in denen ein Öffnungsfluidventil und ein Schließfluidventil angeordnet sind, das Fluid, insbesondere Wasser, zur Aktivierung der Öffnungs- und Schließbewegungen zugeleitet werden kann, wobei vorzugsweise der Öffnungsfluidzuführung die Dosiervorrichtung zugeordnet ist. Dadurch wird eine Einrichtung geschaffen, mit der sich schnell und sicher sowie präzise eine definierte Menge an Feststoff(phase) aus einem Separator entleeren lässt.

Dabei ist vorzugsweise vorgesehen, dass die Dosiervorrichtung ein in einem Dosierraum verschiebliches Dosierelement aufweist, das den Dosierraum in einen Fluidraum und einen Druckraum zur Beaufschlagung mit Druckluft unterteilt. Dadurch wird vorteilhaft eine konstruktiv einfache Dosiervorrichtung geschaffen.

Es kann insbesondere vorteilhaft vorgesehen sein, dass das Dosierelement ein Kolben ist. Damit wird ein robustes und präzise nutzbares Dosierelement geschaffen. Das Dosierelement kann aber auch eine in sich verformbare Membran aufweisen.

Es kann optional vorgesehen sein, dass der Druckraum einen Temperatursensor aufweist. Dadurch können konstruktiv einfach Temperaturschwankungen im Druckraum der Dosiervorrichtung kompensiert werden, indem die Steuerung den Drucksollwert beim Befüllen des Fluidraumes entsprechend variiert oder anpasst.

Nach einer weiteren Variante der Erfindung kann vorgesehen sein, dass der Druckraum unter dem Dosierelement gasdicht ausgeführt ist. Dadurch werden nachteilige Einflüsse wie Druckschwankungen oder ungenaue Messungen der Druckmesseinrichtung und damit ungenaue Dosierungen des Öffnungsfluids vorteilhaft minimiert.

Ebenfalls vorteilhaft ist, wenn nach einer weiteren Option das Volumen des Druckraums so bemessen ist, dass auch bei maximal gefülltem Fluidraum der Druck in der Öffnungsfluidzuführung noch höher ist, als ein Gegendruck im Druckraum. Hierdurch ergibt sich durch eine einfache konstruktive Maßnahme ein sicherer Betrieb der Dosiervorrichtung.

Ferner ist vorteilhaft, wenn nach einer Option in der Öffnungsfluidzuführung eine Blende eingebaut ist. Dadurch wird die Zuflussmenge des Öffnungsfluids begrenzt, so dass auch bei hohen Fluiddrücken der Füllvorgang verlangsamt werden kann, damit die Zielposition des Dosierelements sicher angefahren werden kann.

In einer weiteren vorteilhaften Ausführungsvariante der Erfindung ist die Blende unmittelbar vor dem Einfüllventil angeordnet. Dadurch ergibt sich eine einfache Integrationsmöglichkeit der Blende in die Öffnungsfluidzuführung. Sie kann beispielsweise in eine Verschraubung zwischen Rohrleitung und Ventil integriert sein.

Die Erfindung schafft auch das Verfahren nach Anspruch 9. Dieses vorteilhafte und einfache Verfahren zum Durchführen einer Feststoffentleerung bei einem Verarbeiten eines fliessfähigen Produkts mit einem Separator nach einem der vorgenannten Ansprüche, zeichnet sich durch folgende Verfahrensschritte aus:
a) Bereitstellen eines selbstentleerenden Separators nach einem oder mehreren der darauf bezogenen Ansprüche und Verarbeiten eines zu verarbeitenden fliessfähigen Produkts, wobei es zumindest in eine Flüssigkeitsphase und eine Feststoffphase getrennt wird;
b) Öffnen eines Einfüllventils, wodurch sich das Dosierelement durch das einströmende Fluid in Richtung des Druckraums bewegt, wobei der Druck im Druckraum steigt;
c) Durchführen einer Messung oder wiederholter Messungen im oder am Druckraum mit einer Messeinrichtung und Vergleichen des Messergebnisses mit einem Vorgabewert manuell oder mit einem Steuergerät; wobei im Schritt c) ein Messen des Drucks im Druckraum mit einer Druckmesseinrichtung und ein Vergleichen des gemessenen Drucks mit einem vorgegebenen Druck als Vorgabewert manuell oder mit einem Steuergerät erfolgen;
d) Schließen des Einfüllventils, wenn der gemessene Wert dem Vorgabewert entspricht; so dass ein dosiertes Öffnungsfluidvolumen im Fluidraum vorhanden ist, wobei im Schritt d) ein Schließen des Einfüllventils erfolgt, wenn der gemessene Druck dem vorgegebenen Druck entspricht, so dass ein dosiertes Öffnungsfluidvolumen im Fluidraum vorhanden ist und
e) Öffnen des Öffnungsfluidventils und des Ventils einer Druckluftleitung, um das dosierte Öffnungsfluidvolumen im Fluidraum über eine Öffnungsfluidzuführung und eine Einspritzkammer für Öffnungsfluid in den Separator zu spritzen und dadurch einen Kolbenschieber aus einer Schließstellung in eine Öffnungsstellung zu bewegen, so dass die Feststoffaustragsöffnungen freigegeben werden und die Feststoffphase aus der Schleudertrommel ausgetragen wird.

Dieses einfache und präzise Verfahren bietet zumindest die Vorteile, die auch in Hinsicht auf den Vorrichtungsanspruch 1 gegeben sind und führt auch zu einer präzisen Einstellbarkeit des Dosiervolumens.

Weitere vorteilhafte Ausgestaltungen der Erfindung sind den übrigen Unteransprüchen zu entnehmen.

Nachfolgend wird die Erfindung anhand von Ausführungsbeispielen unter Bezug auf die Zeichnung näher beschrieben. Die Erfindung ist nicht auf diese Ausführungsbeispiele beschränkt, sondern kann auch in anderer Weise wortsinngemäß oder auch in anderer Weise äquivalent realisiert werden. Es zeigt:
- Figur 1:: einen Teilausschnitt einer Schleudertrommel im Schnitt sowie ein Blockschaltbild eines Entleerungsmechanismus der Schleudertrommel für eine Feststoffphase;
- Figur 2:: eine Schnittdarstellung einer erfindungsgemäßen Dosiereinrichtung sowie ein Blockschaltbild der Dosiervorrichtung, wobei die Dosiervorrichtung in einer ersten Position dargestellt ist;
- Figur 3:: eine Schnittdarstellung der Dosiereinrichtung sowie ein Blockschaltbild der Dosiervorrichtung, wobei die Dosiervorrichtung in einer zweiten Position dargestellt ist.

In der nachfolgenden Figurenbeschreibung wird ein Ausführungsbeispiel beschrieben. Die einzelnen Merkmale dieses Ausführungsbeispiel können auch mit nicht gezeigten Ausführungsbeispielen kombiniert werden und eignen sich auch jeweils als vorteilhafte Ausgestaltungen der in einzelnen oder mehreren der in den Haupt- und Unteransprüchen beschriebenen Gegenstände.

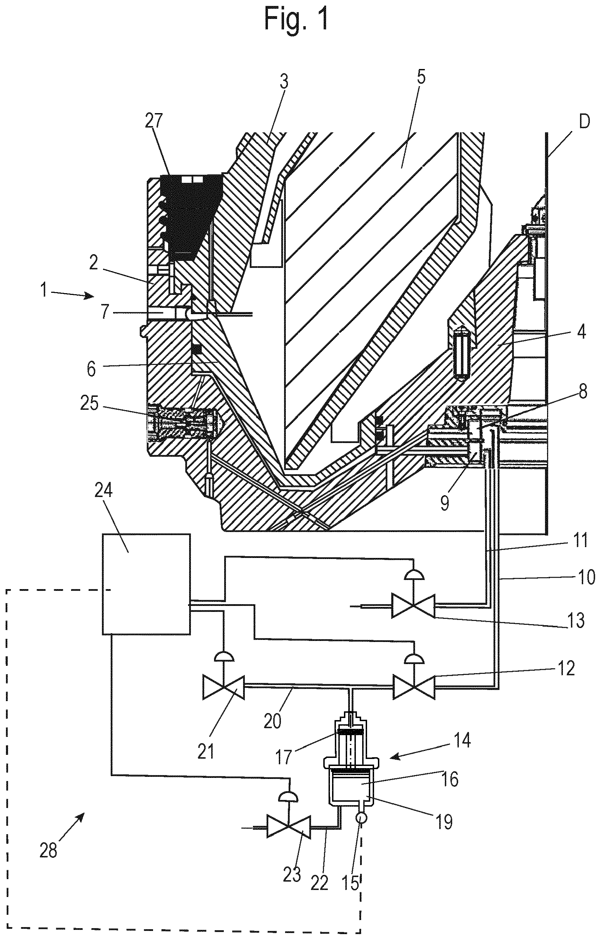

Fig. 1 zeigt einen unteren seitlichen Teilbereich einer drehbaren Schleudertrommel 1 einer als Separator ausgebildeten Zentrifuge. Die Schleudertrommel 1 kann eine vertikale Drehachse D aufweisen.

Die Schleudertrommel kann einfach und/oder wie hier doppelt konisch (unten und/oder oben sowie insbesondere innen) ausgelegt sind. Die Schleudertrommel 1 ist vorzugsweise für einen kontinuierlichen Betrieb ausgelegt.

Die Schleudertrommel 1 kann ein Trommelunterteil 2 und ein Trommeloberteil 3 aufweisen. Diese Trommelteile 2, 3 können auf verschiedene Weise, so mit einem Verschlussring 27 miteinander verbunden sein.

In der Schleudertrommel 1 sind ein Verteiler 4 zur Produktzuleitung und ein Tellerpaket 5 aus Trenntellern angeordnet.

Ein Zulaufrohr und Flüssigkeitsausträge sind nicht dargestellt. Sie können in beliebiger Weise realisiert sein.

Zur Ableitung einer Feststoffphase dient ein Entleerungsmechanismus, der einen Kolbenschieber 6 zum Öffnen und Verschließen von Feststoffaustragsöffnungen 7 aufweist, die umfangsverteilt im Bereich des größten Durchmessers der Schleudertrommel 1 ausgebildet sein können. Der Entleerungsmechanismus umfasst ferner eine dem Kolbenschieber 6 zugeordnete Steuerungsanordnung 28 zur Steuerung seiner Öffnungs- und Schließbewegungen.

Die Steuerungsanordnung 28 weist ein Steuergerät 24 auf. Die Steuerungsanordnung 28 umfasst ferner eine Einspritzkammer 8 für Öffnungsfluid und eine Einspritzkammer 9 für Schließfluid, denen über eine Öffnungsfluidzuführung 10 und eine Schließfluidzuführung 11, in denen ein Öffnungsfluidventil 12 und ein Schließfluidventil 13 angeordnet sein können, ein Fluid, insbesondere Wasser, zur Aktivierung der Öffnungs- und Schließbewegungen zugeleitet werden kann.

Der Öffnungsfluidzuführung 10 ist eine Dosiervorrichtung 14 zugeordnet, die dem Öffnungsfluidventil 12 vorgeschaltet ist.

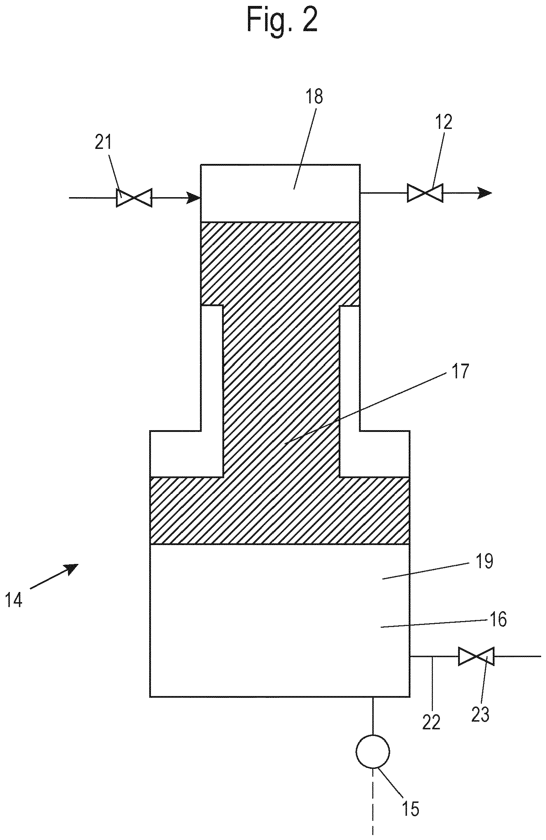

Die Dosiervorrichtung 14 - siehe hierzu auch Fig. 2 - weist ein in einem Dosierraum 16 bewegliches, insbesondere verschiebliches Dosierelement 17 auf, das den Dosierraum 16 in einen Fluidraum 18 und einen Druckraum 19 zur Beaufschlagung mit Fluid, insbesondere einem Gas wie Druckluft, unterteilt. Das Dosierelement 17 ist hier als verschieblicher Kolben ausgeführt. Alternativ zu dem Kolben kann auch eine bewegliche, insbesondere in sich verformbare, Membran als Dosierelement 17 verwendet werden.

Der Fluidraum 18 ist zwischen einem Einfüllventil 21 und dem Öffnungsfluidventil 12 und dem Einstellelement 17 ausgebildet.

In den Druckraum 19 mündet ferner eine Druckluftleitung 22, in die ein Ventil 23 geschaltet ist. Der Steuereingang sämtlicher ansteuerbarer Ventile kann mit dem Steuergerät 24 verbunden sein.

Ein Kolbenventil 25, dass in eine Wandung der Schleudertrommel 1 eingesetzt ist, dient zur gesteuerten Ableitung des zur Durchführung der Öffnungs- und Schließbewegungen des Kolbenschiebers 6 genutzten Fluids (siehe Fig. 1).

Ferner kann in die Fluidzuleitung 20 zusätzlich eine Blende eingebaut sein, um die Zuflussmenge des Öffnungsfluids zu begrenzen und damit auch bei hohen Fluiddrücken den Füllvorgang so zu verlangsamen, dass die Zielposition des Dosierelements 17, bei der der vorgewählte Druck erreicht ist, sicher angefahren werden kann. Eine vorteilhafte Position der Blende ist - in Fließrichtung gesehen - unmittelbar vor dem Einfüllventil 21.

Der Druckraum 19 ist auf einer ersten Seite - hier rein bildlich "unterhalb" - des Dosierelementes 17 durch die Druckluftleitung 22 mit Fluid, insbesondere Luft, befüllbar, so dass in ihm ein Druck aufgebaut werden kann. Er kann aber auch über dieses Ventil 23 "entlüftet" werden. Der Druckraum 19 ist dazu entsprechend gasdicht ausgeführt.

Bei einem Befüllen des Fluidraums 18 auf der anderen Seite - hier rein bildlich "oberhalb" des Dosierelements 17 - mit Fluid, insbesondere Öffnungsfluid, durch die Fluidzuleitung 20 - wird das Fluid, insbesondere die Luft, im Druckraum 19 komprimiert und es entsteht eine Druckerhöhung in dem Druckraum 19 auf der ersten Seite "unterhalb" des Dosierelements 17, wobei diese Druckerhöhung im Druckraum 19 im Wesentlichen proportional zur Positionsänderung des Dosierelements 17 im Dosierraum 16 - hier beispielhaft ausgehend von der Stellung der Fig. 2 - ist.

In dem Druckraum 19 ist eine Messeinrichtung 15 angeordnet bzw. eine solche ist an den Druckraum 19 angeschlossen, so dass mit ihr der Druck im Druckraum 19 bestimmbar ist.

Mit der Druckmesseinrichtung 15 kann der Druck in dem Druckraum 19 derart einmal oder wiederholt gemessen werden, dass über die Druckmessung durch Vergleich mit einer vorgespeicherten Tabelle oder einen gespeicherten funktionalen Zusammenhang oder dgl. die Position des Dosierelements 17 bestimmbar ist. Diese Position ermöglicht wiederum eine Bestimmung des aktuellen Fluidvolumens im Fluidraum 18.

Dazu kann vorgesehen sein, dass der gemessene Druckwert an das Steuergerät 24 weitergegeben wird, um auf der Basis dieses Messwertes mit dem Steuergerät 24 bzw. über das Steuergerät 24 das Volumen des zugeführten Fluids wiederholt durch Messungen bestimmen und somit auch exakt einstellen zu können. Die Befüllung des Fluidraumes 18 kann gestoppt werden, wenn eine gewünschte Befüllung bzw. ein gewünschtes voreingestelltes Dosiervolumen erreicht bzw. eingestellt ist.

Alternativ könnte der Druckwert an der Druckmesseinrichtung 15 auch manuell abgelesen und derart zur Einstellung verwendet werden.

Derart weist die Dosiereinrichtung 14 hier ein Einstellsystem für die Bemessung der Flüssigkeitsmenge - hier des Öffnungsfluidvolumens - zum Betätigen des Entleerungsmechanismus auf, das auf einem fluidischen Messprinzip basiert. Varianten des dargestellten Systems sind im Rahmen des fachmännischen Könnens realisierbar.

Das Volumen des Druckraums 19 auf der ersten Seite des Dosierelementes 17 und das des Fluidraumes 18 auf der anderen Seite des Dosierelementes 17 werden vorzugsweise jeweils so bemessen, dass auch bei maximal gefülltem Fluidraum 18 der Druck in der Fluidzuleitung 20 noch höher ist als der Gegendruck im Druckraum 19.

Mit Hilfe eines zusätzlichen Temperatursensors (nicht dargestellt) in dem Druckraum 19 können Temperaturschwankungen kompensiert werden, indem die Steuerung 24 einen Drucksollwert beim Befüllen des Fluidraumes 18 entsprechend variiert.

Die Funktion dieser Anordnung bei der Verarbeitung eines Schleudergutes sei nochmals kurz zusammengefasst:
In einer ersten Position der Dosiervorrichtung 14, die in Fig. 2 dargestellt ist, ist die Position der Dosierelements 17 "oben" bzw. zum Fluidraum 18 hin, so dass das Volumen des Fluidraums 18 klein ist. Der Druckraum 19 befindet sich auf Umgebungsdruck. Alternativ kann der Druckraum 19 auch einen definierten Vordruck aufweisen. Das Einfüllventil 21 zum Fluidraum 18 hin ist geschlossen. Das Öffnungsfluidventil 12 ist geschlossen. Das Ventil 23 der Druckluftleitung 22 ist ebenfalls geschlossen.

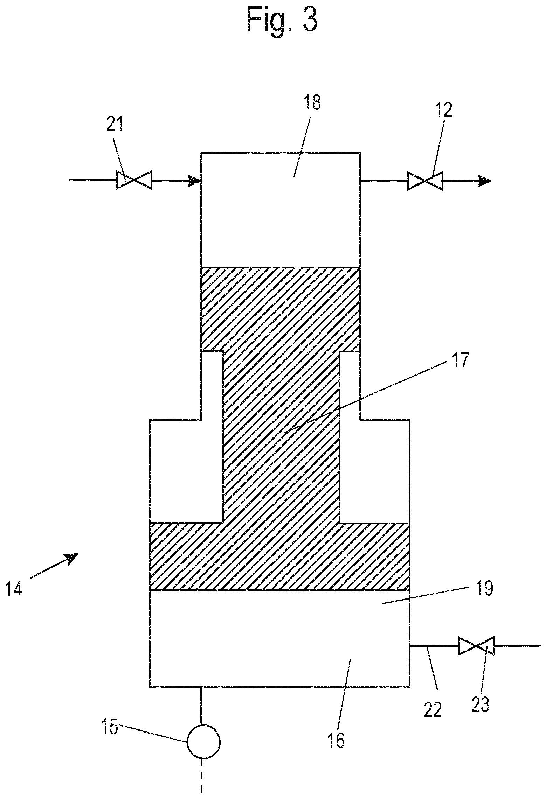

Nun wird das Einfüllventil 21 geöffnet. Durch das einströmende Fluid bewegt sich das Dosierelement 17 nach unten in eine zweite Position, wie dies in Fig. 3 dargestellt ist und der Messwert des Ducks im Druckraum 19 steigt. Wenn der Messwert einen vorgewählten Sollwert erreicht, was einem definierten Fluidvolumen im Fluidraum 18 entspricht, wird das Einfüllventil 21 - manuell oder automatisch mit der Steuerungsvorrichtung 24 angesteuert - geschlossen. Beispielsweise derart kann der Druck im Druckraum vorteilhaft eine Basis der Dosierung der zum Öffnen benötigten Flüssigkeitsmenge bilden.

Nun werden das Öffnungsfluidventil 12 und das Ventil 23 in der Druckluftleitung 22 geöffnet, um das dosierte Öffnungsfluidvolumen im Fluidraum 18 über die Öffnungsfluidzuführung 10 und der Einspritzkammer 8 für Öffnungsfluid in die Trommel zu spritzen, das Kolbenventil 25 zu öffnen und dadurch den Kolbenschieber 6 - hier vertikal nach unten - in die Öffnungsstellung zu bewegen, so dass die Feststoffaustragsöffnungen 7 freigegeben werden und die Feststoffphase aus der Schleudertrommel 1 ausgetragen wird.

Das Messprinzip kann somit eine Art berührungsloses Messprinzip sein. Es sind vorzugsweise keine mechanischen Stellglieder, wie z.B. eine Gewindespindel zur Einstellung des Öffnungsfluidvolumens erforderlich. Somit kann die Dosiereinrichtung 14 vorteilhaft auch sehr hohe Dynamikanforderungen der Regelungsprozesse zur Feststoffaustragung erfüllen.

Das Steuergerät 24 kann mit einem Computerprogrammprodukt gesteuert werden, dass die Separatorsteuerung und -regelung übernimmt und ggf. auch die Betätigung des Kolbenschiebers, insbesondere auch die Dosierung, insbesondere auch die Durchführung und Ausführung der Messungen, steuert.

Bereits vorhandene Zentrifugen mit einer Dosiervorrichtung mit mechanischen Stellgliedern zur Bemessung des Öffnungsfluidvolumens können mit der erfindungsgemäßen Dosiervorrichtung 14 vorteilhaft einfach nach- oder umgerüstet werden, da oftmals lediglich die mechanischen Stellglieder, wie z.B. eine Gewindestange gegen eine Messeinrichtung 15 ausgetauscht werden muss, und die Software der Steuerung angepasst werden muss.

### Bezugszeichen

- 1: Schleudertrommel
- 2: Trommelunterteil
- 3: Trommeloberteil
- 4: Verteiler
- 5: Tellerpaket
- 6: Kolbenschieber
- 7: Feststoffaustragsöffnung
- 8: Einspritzkammer für Öffnungsfluid
- 9: Einspritzkammer für Schließkammer
- 10: Öffnungsfluidzuführung
- 11: Schließfluidzuführung
- 12: Öffnungsfluidventil
- 13: Schließfluidventil
- 14: Dosiervorrichtung
- 15: Messeinrichtung
- 16: Dosierraum
- 17: Dosierelement
- 18: Fluidraum
- 19: Druckraum
- 20: Fluidzuleitung
- 21: Einfüllventil
- 22: Druckluftleitung
- 23: Ventil
- 24: Steuergerät
- 25: Kolbenventil
- 27: Verschlussring
- 28: Steuerungsanordnung

- D: Drehachse

## Patentansprüche

1. Selbstentleerender Separator, der eine drehbare Schleudertrommel (1) mit vertikaler Drehachse aufweist, die mit Feststoffaustragsöffnungen (7) versehen ist, denen ein Entleerungsmechanismus mit einem Kolbenschieber (6) zugeordnet ist, der fluidbetätigt, insbesondere mittels Fluid, in eine Öffnungs- und in eine Schließstellung bewegbar ist, wobei der Entleerungsmechanismus ferner eine dem Kolbenschieber (6) zugeordnete Steuerungsanordnung (28) zur Steuerung seiner Öffnungs- und Schließbewegungen aufweist, die mit einem Steuergerät (24) und mit einer Dosiervorrichtung (14) zur Dosierung und Abgabe der zum Öffnen benötigten Fluidmenge, insbesondere Flüssigkeitsmenge versehen ist, wobei die Dosiervorrichtung (14) ein in einem Dosierraum (16) verschiebliches Dosierelement (17) aufweist, das den Dosierraum (16) in einen Fluidraum (18) und in einen Druckraum (19) zur Beaufschlagung mit Druckluft unterteilt, wobei die Dosiervorrichtung (14) ein Einstellsystem zur Dosierung der zum Öffnen benötigten Fluidmenge, insbesondere Flüssigkeitsmenge, im Fluidraum (18) aufweist, welches eine Messeinrichtung (15) aufweist, **dadurch gekennzeichnet, dass** die Messeinrichtung auf einem fluidischen Messprinzip basiert und wobei das Einstellsystem mit der Messeinrichtung, die auf einem fluidischen Messprinzip basiert, eine in dem Druckraum (19) angeordnete Druckmesseinrichtung (15) aufweist, mit welcher der Druck im Druckraum (19) bestimmbar ist, wobei der Druck im Druckraum (19) eine Basis der Dosierung der zum Öffnen benötigten Flüssigkeitsmenge bildet.

2. Selbstentleerender Separator nach Anspruch 1, **dadurch gekennzeichnet, dass** die Steuerungsanordnung (28) eine Einspritzkammer (8) für Öffnungsfluid aufweist, der über eine Öffnungsfluidzuführung (10), in der ein Öffnungsfluidventil (12) angeordnet ist, das Fluid, insbesondere Wasser, zur Aktivierung von Öffnungsbewegungen zuleitbar ist.

3. Selbstentleerender Separator nach einem der vorstehenden Ansprüche, **dadurch gekennzeichnet, dass** das Dosierelement (17) als ein Kolben oder als eine Membran ausgebildet ist.

4. Selbstentleerender Separator nach einem der vorstehenden Ansprüche, **dadurch gekennzeichnet, dass** der Druckraum (19) einen Temperatursensor aufweist.

5. Selbstentleerender Separator nach einem der vorstehenden Ansprüche, **dadurch gekennzeichnet, dass** das Volumen des Druckraums (19) so bemessen ist, dass auch bei maximal gefülltem Fluidraum (18) der Druck in der Fluidzuleitung (20) noch höher ist, als ein Gegendruck P im Druckraum (19).

6. Selbstentleerender Separator nach einem der vorstehenden Ansprüche, **dadurch gekennzeichnet, dass** der Fluidraum (18) zwischen einem Einfüllventil (21) und dem Öffnungsfluidventil (12) geschaltet ist.

7. Selbstentleerender Separator nach einem der vorstehenden Ansprüche, **dadurch gekennzeichnet, dass** in die Fluidzuleitung (20) eine Blende eingebaut ist.

8. Selbstentleerender Separator nach einem der vorstehenden Ansprüche, **dadurch gekennzeichnet, dass** die Blende unmittelbar vor dem Einfüllventil (21) angeordnet ist.

9. Verfahren zum Durchführen einer Feststoffentleerung bei einem Verarbeiten eines fliessfähigen Produkts mit einem Separator nach einem der vorgenannten Ansprüche, **gekennzeichnet durch** folgende Verfahrensschritte:
a. Bereitstellen eines selbstentleerenden Separators nach einem der vorgenannten Ansprüche und Verarbeiten eines zu verarbeitenden fliessfähigen Produkts, wobei es zumindest in eine Flüssigkeitsphase und eine Feststoffphase getrennt wird;
b. Öffnen eines Einfüllventils (21), wodurch sich das Dosierelement (17) durch das einströmende Fluid in Richtung des Druckraums (19) bewegt, wobei der Druck im Druckraum (19) steigt;
c. Durchführen einer Messung oder wiederholter Messungen im oder am Druckraum (19) mit einer Messeinrichtung (15) und Vergleichen des Messergebnisses mit einem Vorgabewert manuell oder mit einem Steuergerät (24) wobei im Schritt c) ein Messen des Drucks (P) im Druckraum mit einer Druckmesseinrichtung (15) und ein Vergleichen des gemessenen Drucks mit einem vorgegebenen Druck als Vorgabewert manuell oder mit einem Steuergerät (24) erfolgen;
d. Schließen des Einfüllventils (21), wenn der gemessene Wert dem Vorgabewert entspricht; so dass ein dosiertes Öffnungsfluidvolumen im Fluidraum (18) vorhanden ist, wobei im Schritt d) ein Schließen des Einfüllventils (21) erfolgt, wenn der gemessene Druck dem vorgegebenen Druck entspricht; so dass das dosierte Öffnungsfluidvolumen im Fluidraum (18) vorhanden ist;
e. Öffnen des Öffnungsfluidventils (12) und des Ventils (23) einer Druckluftleitung (22), um das dosierte Öffnungsfluidvolumen im Fluidraum (18) über eine Öffnungsfluidzuführung (10) und eine Einspritzkammer (8) für Öffnungsfluid in den Separator zu spritzen, das Kolbenventil (25) zu öffnen und dadurch einen Kolbenschieber (6) aus einer Schließstellung in eine Öffnungsstellung zu bewegen, so dass die Feststoffaustragsöffnungen (7) freigegeben werden und die Feststoffphase aus der Schleudertrommel (1) ausgetragen wird.

## Claims

1. Self-emptying separator comprising a rotatable centrifugal drum (1) that has a vertical axis of rotation and is provided with solids discharge openings (7), to which an emptying mechanism having a piston valve (6) is assigned, which piston valve can be moved into an opening position and into a closing position in a fluid-actuated manner, in particular by means of fluid, wherein the emptying mechanism further comprises a control assembly (28) which is assigned to the piston valve (6) for controlling its opening and closing movements, which is provided with a control unit (24) and with a metering device (14) for metering and dispensing the quantity of fluid, in particular the amount of liquid, required for the opening process, wherein the metering device (14) has a metering element (17) which is displaceable in a metering chamber (16) and which subdivides the metering chamber (16) into a fluid chamber (18) and a pressure chamber (19) for the application of compressed air, wherein the metering device (14) has an adjusting system for metering the amount of fluid, in particular the amount of liquid, required for the opening process in the fluid chamber (18), which adjusting system has a measuring device (15), **characterized in that** the measuring device is based on a fluidic measuring principle and wherein the adjusting system with the measuring device, which is based on a fluidic measuring principle, has a pressure measuring device (15) which is arranged in the pressure chamber (19) and with which the pressure in the pressure chamber (19) can be determined, wherein the pressure in the pressure chamber (19) forms a basis for the metering of the amount of fluid required for the opening process.

2. Self-emptying separator according to claim 1, **characterized in that** the control assembly (28) has an injection chamber (8) for opening fluid, to which the fluid, in particular water, can be fed via an opening fluid supply (10), in which an opening fluid valve (12) is arranged, for activating opening movements.

3. Self-emptying separator according to one of the preceding claims,
**characterized in that** the metering element (17) is designed as a piston or as a diaphragm.

4. Self-emptying separator according to one of the preceding claims,
**characterized in that** the pressure chamber (19) has a temperature sensor.

5. Self-emptying separator according to one of the preceding claims,
**characterized in that** the volume of the pressure chamber (19) is dimensioned in such a way that, even when the fluid chamber (18) is filled to the maximum, the pressure in the fluid supply line (20) is still higher than a counterpressure P in the pressure chamber (19).

6. Self-emptying separator according to one of the preceding claims,
**characterized in that** the fluid chamber (18) is connected between a filling valve (21) and the opening fluid valve (12).

7. Self-emptying separator according to one of the preceding claims,
**characterized in that** an orifice plate is incorporated into the fluid supply line (20).

8. Self-emptying separator according to one of the preceding claims,
**characterized in that** the orifice is arranged immediately upstream of the filling valve (21).

9. Method for performing a solids discharge in a processing of a flowable product with a separator according to one of the preceding claims, **characterized by** the method steps of:
a. providing a self-emptying separator according to one of the preceding claims and processing a flowable product to be processed, separating it at least into a liquid phase and a solid phase;
b. opening of a filling valve (21), causing the metering element (17) to move towards of the pressure chamber (19) due to the incoming fluid, wherein the pressure in the pressure chamber (19) increases;
c. carrying out a measurement or repeated measurements in or on the pressure chamber (19) with a measuring device (15) and comparing the measurement result with a preset value manually or with a control unit (24), wherein in step c) the pressure (P) in the pressure chamber is measured with a pressure measuring device (15) and the measured pressure is compared with a predetermined pressure as default value manually or with a control device (24);
d. closing the filling valve (21) when the measured value corresponds to the default value; so that a metered opening fluid volume is present in the fluid chamber (18), wherein in step d) a closing of the filling valve (21) takes place when the measured pressure corresponds to the predetermined pressure; so that the metered opening fluid volume is present in the fluid chamber (18);
e. opening the opening fluid valve (12) and the valve (23) of a compressed air line (22) to inject the metered opening fluid volume in the fluid chamber (18) into the separator via an opening fluid supply (10) and an injection chamber (8) for opening fluid, to open the piston valve (25) and to thereby move a piston valve (6) from a closed position to an open position so that the solids discharge openings (7) are released and the solids phase is discharged from the centrifugal drum (1).

## Revendications

1. Séparateur à vidage automatique, comportant un tambour de centrifugation (1) rotatif à axe de rotation vertical qui est muni d'ouvertures d'évacuation de solides (7) auxquelles est associé un mécanisme de vidage avec une vanne à piston (6) qui peut être déplacée dans une position ouverte et une position fermée sous l'action d'un fluide, en particulier au moyen d'un fluide, le mécanisme de vidage comportant en outre un dispositif de commande (28) associé à la vanne à piston (6) pour commander ses mouvements d'ouverture et de fermeture et muni d'une unité de commande (24) et d'un dispositif de dosage (14) pour le dosage et la distribution de la quantité de fluide, en particulier de la quantité de liquide, nécessaire à l'ouverture, le dispositif de dosage (14) comportant un élément doseur (17) capable de translation dans un espace de dosage (16), qui divise l'espace de dosage (16) en un espace de fluide (18) et un espace de pression (19) soumis à l'action d'air comprimé, le dispositif de dosage (14) comportant un système de réglage, qui comporte une installation de mesure (15), pour le dosage de la quantité de fluide nécessaire à l'ouverture, en particulier de la quantité de liquide, dans l'espace de fluide (18), **caractérisé en ce que** l'installation de mesure se base sur un principe de mesure fluidique, le système de réglage comportant avec l'installation de mesure basée sur un principe de mesure fluidique une installation de mesure de la pression (15) disposée dans l'espace de pression (19) avec laquelle la pression peut être déterminée dans l'espace de pression (19), la pression dans l'espace de pression (19) formant une base du dosage de la quantité de liquide nécessaire à l'ouverture.

2. Séparateur à vidage automatique selon la revendication 1, **caractérisé en ce que** le dispositif de commande (28) comporte une chambre d'injection (8) pour du fluide d'ouverture dans laquelle le fluide, en particulier de l'eau, peut être amené via une arrivée de fluide d'ouverture (10), dans laquelle est disposé un robinet de fluide d'ouverture (12), pour activer des mouvements d'ouverture.

3. Séparateur à vidage automatique selon l'une des revendications
précédentes, **caractérisé en ce que** l'élément doseur (17) est conformé comme un piston ou comme une membrane.

4. Séparateur à vidage automatique selon l'une des revendications
précédentes, **caractérisé en ce que** l'espace de pression (19) comporte une sonde de température.

5. Séparateur à vidage automatique selon l'une des revendications
précédentes, **caractérisé en ce que** le volume de l'espace de pression (19) est dimensionné de telle manière que, même quand l'espace de fluide (18) est rempli au maximum, la pression dans la conduite d'arrivée de fluide (20) reste plus élevée qu'une contre-pression P dans l'espace de pression (19).

6. Séparateur à vidage automatique selon l'une des revendications
précédentes, **caractérisé en ce que** l'espace de fluide (18) est monté entre un robinet de remplissage (21) et le robinet de fluide d'ouverture (12).

7. Séparateur à vidage automatique selon l'une des revendications
précédentes, **caractérisé en ce qu'**une chicane est montée dans la conduite d'arrivée de fluide (20).

8. Séparateur à vidage automatique selon l'une des revendications
précédentes, **caractérisé en ce que** la chicane est disposée juste devant le robinet de remplissage (21).

9. Procédé pour le vidage de solides lors du traitement d'un produit fluide avec un séparateur selon l'une des revendications précédentes, **caractérisé en ce qu'**il comprend les étapes suivantes :
a. préparation d'un séparateur à vidage automatique selon l'une des revendications précédentes et traitement d'un produit fluide à traiter qui est séparé en au moins une phase liquide et une phase solide ;
b. ouverture d'un robinet de remplissage (21), de sorte que l'élément doseur (17) est déplacé par le fluide entrant vers l'espace de pression (19), tandis que la pression dans l'espace de pression (19) augmente ;
c. exécution d'une mesure ou de mesures répétées dans ou sur l'espace de pression (19) avec une installation de mesure (15) et comparaison du résultat de mesure avec une valeur de consigne, manuellement ou avec un appareil de commande (24), une mesure de la pression (P) dans l'espace de pression étant réalisée, dans l'étape c), avec une installation de mesure de la pression (15) et une comparaison de la pression mesurée avec une pression prédéfinie servant de valeur de consigne étant réalisée manuellement ou avec un appareil de commande (24) ;
d. fermeture du robinet de remplissage (21) quand la valeur mesurée correspond à la valeur de consigne, de sorte que l'espace de fluide (18) contient un volume de fluide d'ouverture dosé, le robinet de remplissage (21) étant fermé, dans l'étape d), quand la pression mesurée correspond à la pression prédéfinie, de sorte que l'espace de fluide (18) contient le volume de fluide d'ouverture dosé ;
e. ouverture du robinet de fluide d'ouverture (12) et du robinet (23) d'une conduite d'air comprimé (22) pour injecter le volume de fluide d'ouverture dosé dans l'espace de fluide (18) dans le séparateur via une arrivée de fluide d'ouverture (10) et une chambre d'injection (8) pour le fluide d'ouverture, ouvrir le robinet à piston (25) et déplacer ainsi la vanne à piston (6) d'une position fermée à une position ouverte, de telle manière que les ouvertures d'évacuation de solides (7) soient dégagées et que la phase solide soit évacuée du tambour de centrifugation (1).
